# EUROPEAN PATENT SPECIFICATION

(11) **EP 1 267 746 B1**
(45) Date of publication and mention of the grant of the patent: **30.08.2006**
(21) Application number: 01925864.9
(22) Date of filing: 03.04.2001
(51) Int. Cl.: A61C 9/00

(54) **DENTAL IMPRESSION-MAKING DEVICE AND METHOD OF MANUFACTURE THEREOF**
VORRICHTUNG ZUM BILDEN EINES ZAHNABDRUCKS UND DEREN HERSTELLUNGSVERFAHREN
DISPOSITIF D'EMPREINTES DENTAIRES ET PROCEDE DE FABRICATION CORRESPONDANT

(30) Priority: 07.04.2000 IT FI000088
(43) Date of publication of application: 02.01.2003
(73) Proprietor: Cozzi, Gualtiero, I-50137 Firenze (IT)
(72) Inventor: Cozzi, Gualtiero, I-50137 Firenze (IT)
(74) Representative: Mannucci, Michele
(86) International application number: PCT/IT2001/000171
(87) International publication number: WO 2001/076502

(56) References cited:
- EP-A- 0 950 382
- WO-A-95/19741
- FR-A- 2 374 889
- GB-A- 513 759
- US-A- 1 369 768
- US-A- 2 564 167
- US-A- 4 413 979

## Description

### Technical Field

The invention relates to a process for the manufacture of an impression-making spoon for dental use and to an impression-making spoon obtained using said method.

For the manufacture of dental prostheses, tooth-correction apparatus and the like, impressions of the dental arches are normally made using alginates or other impression materials. Plaster is then cast in the impressions in order to form the model reproducing the characteristics of the patient's teeth. For formation of the impression, the suitably mixed material is applied to a spoon which has a tray for receiving the impression material, with a shape, and size such as to accommodate the whole of the patient's arch. The spoon is, moreover, equipped with a fitted handle by means of which the tray containing the impression material is inserted into the oral cavity of the patient.

Spoons with different shapes are used for the upper and lower arches, respectively. The impression-making spoon, which is suitably filled with the impression material, is gripped between the patient's teeth so as to embed all the teeth of one of the two arches in the impression material. Once the necessary hardening time has lapsed, the impression-making spoon is extracted.

### State of the Art

The impression-making spoons are generally made of metal and intended for multiple use. It is therefore necessary to clean and sterilize them thoroughly between use on different patients, among other things and in particular to prevent the spread of contagious diseases which in certain cases may be very dangerous and may be transmitted by means of biological fluids and in particular by blood.

The impression-making spoons which are currently known have a series of fitted elements which make it difficult, if not impossible, to perform correct cleaning and sterilization of said spoon between use on one patient and the next, Only by using spoons made by means of die-casting is it possible to eliminate the undercuts and the superficial niches inside which the paste material, saliva and blood become trapped and which are practically impossible to clean. However, spoons made by means of die-casting have an excessively high cost and for this reason are not popular on the market and in fact are used to a very limited degree.

Document US-A-2 564 167 (MCLAUGHLIN NEIL) discloses a method of manufacture of an impression-making spoon as well as the resulting spoon, adapted to accommodate the whole of a teeth arch comprising a tray for the impression material, with a bottom and a shoulder; wherein said spoon is formed by means of folding of a single sheet of cut laminar material with a central portion intended to form the bottom and two symmetrical side portions intended to form the shoulders of the tray; wherein said symmetrical side portions may be folded along curved folding lines joining them to the central portion and said symmetrical side portions have zones ending with a respective edge; the method comprising the steps of folding said symmetrical side portions along said curved folding lines until they are brought into a position approximately perpendicular to the central portion; and folding the zones of said side portions along a cylindrical surface until they complete the front zone of the tray shoulder by bringing said edges of the side portions in an end-to-end arrangement in the front zone of the spoon.

Normally, therefore, the spoon is made by means of one or more operations using a portion of drawn sheet metal which forms the tray inside which the impression-forming paste is arranged. The handle, by means of which the dentist manipulates the spoon, is joined to the tray by means of welding. This results, on the one hand, in the drawback that niches which cannot be reached during washing and sterilization are formed between the handle and the tray body and, on the other hand, in a high production cost owing to the need for several operations in order to achieve the finished product.

### Objects of the invention

The present invention relates to an impression-making spoon for dental use and to a process for the production thereof, which avoid the drawbacks of conventional spoons.

More, particularly, a first object of the present invention is to provide a faster and more economical production process and therefore a more low-cost spoon.

A second object of the present invention consists in providing an impression-making spoon which is more functional and easier to clean and sterilize.

A further object of the present invention is to provide an impression-making spoon in which the impression-forming material is reliably retained inside the tray during separation of the impression from the patient's dental arch.

### Summary of the invention

These and further objects and advantages, which will become clear to persons skilled in the art from reading of the text below, are obtained using a method in which the tray and the handle of the spoon are made by means of folding of a single sheet of cut laminar material.

More particularly, according to a possible embodiment of the invention, the process comprises the steps of: providing a sheet of cut laminar material with a central portion intended to form the bottom of the tray, a front extension intended to form the handle and two symmetrical side portions intended to form the shoulders of the tray, partially joined to said central portion along curved folding lines; and folding the side portions along said curved folding lines until they are brought into a position approximately perpendicular to the central portion, folding said side portions along a cylindrical surface until they complete the front zone of the tray shoulder.

With the method according to the invention an impression-making spoon for dental use comprising a tray for containing the impression material and a handle for manipulating the spoon is obtained, wherein said handle and said tray are made from a single sheet of cut and folded laminar material. This reduces the cost of the spoon and makes it easier to sterilize. The side portions of the sheet of cut laminar material (typically sheet steel) which form the side shoulders of the tray may be welded together along their edges arranged end-to-end and along the bottom edge of the tray. However, this is not essential. The absence of a weld, in addition to providing a product which has a lower cost and is safer from a hygiene point of view, results in two further advantages: firstly, the slit which remains between the shoulders and the bottom of the tray helps retain the impression material when forming said impression. In this way it is ensured that the impression does not become detached from the spoon when the latter is extracted from the patient's teeth. Secondly, the shoulders which are not welded together and partially separated from the bottom of the tray allow adaptation, by means of plastic deformation, of the shape of the tray to the configuration of dental arches of patients who have projecting incisors. The slit which remains between the various portions of the tray bottom and shoulders arranged end-to-end has a depth equal to the thickness of the sheet metal forming the spoon and is accessible on both sides. This avoids any hygiene and sterilization-related problems.

Further advantageous features and embodiments of the process and the product according to the present invention are described in the accompanying claims.

### Brief description of the drawings

The invention will be better understood with reference to the description and the accompanying drawing which shows a practical nonlimiting example of said invention. In said drawing:
Fig. 1 shows a developed plan view of the cut laminar material from which the impression-making spoon is formed; and
Figs. 2 and 3 show two perspective views, from two different angles, of the impression-making spoon obtained using the cut laminar material according to Fig. 1.

### Detailed description of a preferred embodiment of the invention

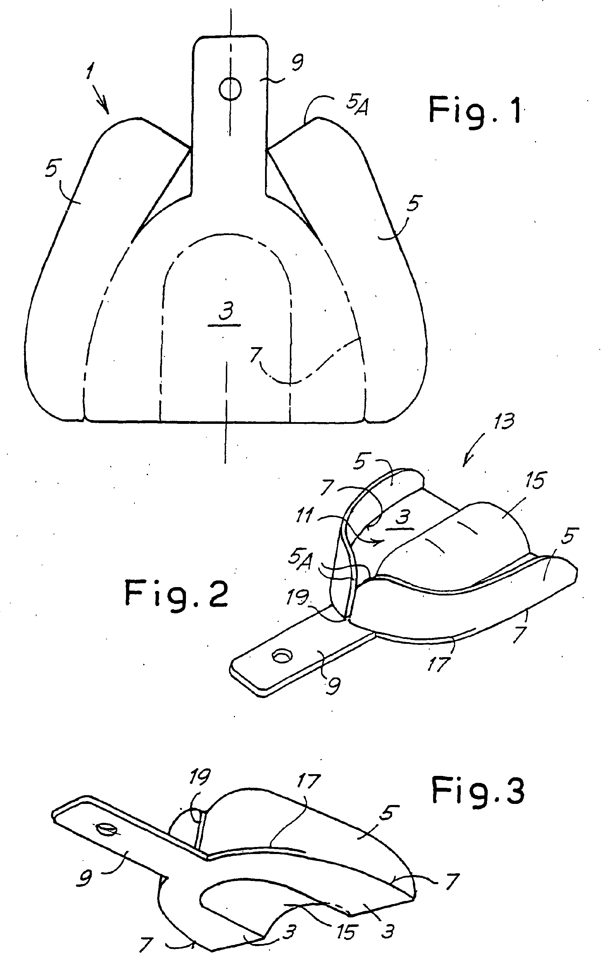

The semi-finished starting material for the production of the impression-making spoon is a sheet of cut laminar material which is generically indicated by 1 and shown in Fig. 1. The laminar sheet has a central portion 3 which is intended to form the bottom of the tray for application of the impression material. Two symmetrical side portions 5, which are joined to the central portion 3 along a folding line 7, extend laterally with respect to the central portion 3. At the front the central portion 3 is extended by a front extension 9 intended to form the handle for gripping and manipulating the spoon.

The impression-making spoon is obtained by means of folding of the cut sheet metal shown in Fig. 1. More particularly, the side portions 5 are folded along the folding lines 7 until they reach a position approximately perpendicular to the central portion 3. Moreover, the zone of each side portion 5 not joined along the line 7 to the central portion 3 is folded along a cylindrical surface so that the two ends 5A of the two side portions 5 are arranged end-to-end in the front zone of the spoon, opposite the handle.

The result of these plastic deformation operations is illustrated in Figs. 2 and 3. The side portions 5 folded and curved along the cylindrical surface form the side and front shoulder of the tray - generically indicated by 11 - of the spoon 13. The handle formed by the extension 9 extends underneath the shoulders, opposite the edges 5A of the side portions 5 arranged end-to-end. In the example illustrated, the central portion 3 has been drawn centrally so as to obtain a central rounded portion 15 corresponding to the palate. In the case where the spoon is used for impressions of the lower arch, the tray will have a free central zone for the patient's tongue.

A slit 17, which may have dimensions, for example, of about 0.5 mm, remains between each side portion 5 and the central portion 3. A similar slit 19 is formed between the edges 5A of the side portions 6 arranged end-to-end. These slits may be closed by means of welding. However, in order to avoid a further step in the production cycle, this welding operation may be omitted. Thus, further advantages are obtained, i.e.:
- greater hygiene, since the weld bead has rough surfaces which are difficult to clean and sterilize;
- the possibility of plastically deforming the front edges of the side portions 5 so as to adapt the spoon to particularly difficult tooth shapes (incisors which project greatly);
- the slits 17, 19 form zones for retaining the impression material which thus adheres more tightly to the tray and does not tend to be separated from the latter during extraction from the oral cavity. The provision of retaining tongues or cavities along the bottom or the shoulders of the tray 11, as is normally required in conventional impression-making spoons, thus becomes superfluous.

The thickness of the metal sheet forming the spoon is such that the depth of the slits 17 and 19 is limited. Since they are accessible on both sides, said slits may be easily cleaned and sterilized, unlike the cavities and the undercuts which are formed, for example, between the bottom surface of the tray and the handle in conventional spoons made as two parts.

The spoon obtained from plastic deformation of the metal sheet according to Fig. 1 may be further finished so as to eliminate the sharp edges (if not eliminated during the previous cutting operation), polished or in any case treated using methods known per se.

It is understood that the drawing shows only one example provided merely by way of a practical demonstration of the invention, the forms and arrangements of said invention being subject to variation without thereby departing from the scope of the invention as defined by the appended claims. The presence of any reference numbers in the accompanying claims is intended to facilitate reading of the claims with reference to the description and to the drawing and does not limit the scope of protection represented by the claims.

## Claims

1. A method for the manufacture of an impression-making spoon for dental use, adapted to accommodate the whole of a teeth arch, comprising:
a tray (11) for the impression-forming material, with a bottom and a shoulder; and a handle (9) for manipulating the spoon; wherein said tray and said handle are formed by means of folding of a single sheet of cut laminar material (1) with a central portion (3) intended to form the bottom of the tray (11), a front extension (9) intended to form the handle and two symmetrical side portions (5) intended to form the shoulders (5) of the tray (11), said method comprising the steps of: providing said sheet of laminar material with said two symmetrical side portions (5) partially joined to said central portion (3) along curved folding lines (7) and having zones not joined to the central portion, each of said zones ending with a respective edge (5A); folding the side portions (5) along said curved folding lines (7) until they are brought into a position approximately perpendicular to the central portion (3); and folding the zones of said side portions which are not joined to said central portion (3) along a cylindrical surface until they complete the front zone of the tray shoulder by bringing said edges (5A) of the side portions (5) in an end-to-end arrangement in the front zone of the spoon, above said handle.

2. A method as claimed in claim 1, **characterized by** the fact of welding the side portions together along the respective edges (5A) arranged end-to-end and/or to said central portion.

3. An impression-making spoon for dental use adapted to accommodate the whole of an arch, comprising:
- a tray (11) for containing the impression material, with a bottom (3) and a shoulder (5);
- and a handle (9) for manipulating the spoon,
wherein said handle and said tray are made from a single sheet of laminar material (1) which is cut and folded, and wherein
said shoulder is formed by two side portions (5) having two edges (5A) arranged end-to-end in the front zone of the spoon, above the handle (9).

4. An impression-making spoon as claimed in claim 3, **characterized in that** said two side portions (5) are connected to said bottom portion (11) along two curved folding lines (7) and that said side portions (5) are curved along a cylindrical surface to form said front zone of the tray shoulder.

5. An impression-making spoon as claimed in claim 3 or 4, **characterized in that** said sheet of laminar material is a metal sheet

6. An impression-making spoon as claimed in claim 3 or 4 or 5, **characterized in that** said side portions (5) are partially separated from the bottom portion (3) along a slit (17) in the front zone of the tray and are moreover separated from each other along the respective edges (5A) arranged end-to-end.

7. An impression-making spoon as claimed in claim 3 or 4 or 5, **characterized in that** said side portions (5) forming said shoulder are welded together and/or to the bottom portion (3) of the tray (11).

## Patentansprüche

1. Verfahren zur Herstellung eines Zahnabdrucklöffels für zahnärztliche Verwendung, der so ausgebildet ist, dass er den gesamten Zahnbogen aufnehmen kann, mit:
einem Trog (11) für das abdruckbildende Material, mit einem Boden und einem Ansatz; und einem Handgriff (9) zur Handhabung des Löffels; wobei der Trog und der Handgriff durch Falten eines einzigen Blattes ausgeschnittenen laminaren Materials (1) gebildet wird, mit einem zentralen Teil (3), der dazu dient, den Boden des Troges (11) zu bilden, einer vorderen Verlängerung (9), die dazu dient, den Handgriff zu bilden und zwei symmetrischen Seitenteilen (5), die dazu dienen, die Ansätze (5) des Troges (11) zu bilden, wobei das Verfahren die Schritte aufweist: Versehen des Blattes laminaren Materials mit den zwei symmetrischen Seitenteilen (5), die teilweise an den mittleren Teil (3) entlang gekrümmter Faltlinien (7) anschließen und die Zonen haben, die nicht an den mittleren Teil anschließen, wobei jede dieser Zonen mit einer entsprechenden Kante (5A) endet; Falten der Seitenteile (5) entlang dieser gekrümmten Faltlinien (7) bis sie in eine Position ungefähr rechtwinkelig zu dem mittleren Teil (3) gebracht sind; und Falten der Zonen der Seitenteile, die nicht mit dem mittleren Teil (3) verbunden sind, entlang einer zylindrischen Oberfläche, bis sie die vordere Zone des Trogansatzes schließen, indem die Kanten (5A) der Seitenteilen (5) in der vorderen Zone des Löffels oberhalb des Handgriffs in eine Stoß-an-Stoß-Anordnung gebracht werden.

2. Verfahren nach Anspruch 1, ***gekennzeichnet durch*** die Tatsache, dass die Seitenteile entlang ihrer jeweiligen Kanten (5A), die Stoß-an-Stoß angeordnet sind, zusammen und/oder an den mittleren Teil geschweißt werden.

3. Zahnabdrucklöffel für zahnärztliche Zwecke, der so ausgebildet ist, dass er den gesamten Zahnbogen aufnehmen kann, mit:
- einem Trog (11) zum Aufnehmen des Abdruckmaterials, mit einem Boden (3) und einem Ansatz (5);
- und einem Handgriff (9) zur Handhabung des Löffels,
wobei der Handgriff und der Trog aus einem einzigen Blatt laminaren Materials (1) bestehen, das ausgeschnitten und gefaltet ist, und wobei
der Ansatz durch zwei Seitenteile (5) gebildet ist, die zwei Kanten (5A) haben, welche in der vorderen Zone des Löffels oberhalb des Handgriffes (9) Stoß-an-Stoß angeordnet sind.

4. Zahnabdrucklöffel nach Anspruch 3, ***dadurch gekennzeichnet,* dass** die zwei Seitenteile (5) mit dem Bodenteil (11) entlang von zwei gekrümmten Faltlinien (7) verbunden sind und dass die Seitenteile (5) entlang einer zylindrischen Fläche gekrümmt sind, um die vordere Zone des Trogansatzes zu bilden.

5. Zahnabdrucklöffel nach Anspruch 3 oder 4, ***dadurch gekennzeichnet,* dass** das Blatt aus laminarem Material ein Metallblech ist.

6. Zahnabdrucklöffel nach Anspruch 3, 4 oder 5, ***dadurch gekennzeichnet,* dass** die Seitenteile (5) teilweise von dem Bodenteil (3) entlang eines Schlitzes (17) in der vorderen Zone des Troges getrennt sind und darüber hinaus voneinander entlang der jeweiligen Kanten (5A), die Stoß-an-Stoß angeordnet sind, getrennt sind.

7. Zahnabdrucklöffel nach Anspruch 3, 4 oder 5, ***dadurch gekennzeichnet,* dass** die Seitenteile (5), welche den Ansatz bilden, zusammengeschweißt sind und/oder an dem Bodenteil (3) des Troges (11) angeschweißt sind.

## Revendications

1. Procédé de fabrication d'un porte-empreinte à usage dentaire, adapté pour s'accommoder à l'ensemble d'une arcade dentaire, comprenant : un plateau (11) pour le matériau de prise d'empreinte, avec un fond et un épaulement ; et une poignée (9) pour manipuler le porte-empreinte ; dans lequel ledit plateau et ladite poignée sont formés en pliant une seule feuille de matériau laminaire (1) découpée ayant une partie centrale (3) visant à former le fond du plateau (11), une extension frontale (9) visant à former la poignée et deux parties latérales symétriques (5) visant à former les épaulements (5) du plateau (11), ledit procédé comprenant les étapes consistant à doter ladite feuille de matériau laminaire desdites deux parties latérales symétriques (5) partiellement reliées à ladite partie centrale (3) le long de lignes de pliage incurvées (7) et ayant des zones non reliées à la partie centrale, chacune desdites zones se terminant par un bord respectif (5A) ; à plier les parties latérales (5) le long desdites lignes de pliage incurvées (7) jusqu'à ce qu'elles soient placées en une position approximativement perpendiculaire à la partie centrale (3) ; et à plier les zones desdites parties latérales qui ne sont pas reliées à ladite partie centrale (3) le long d'une surface cylindrique jusqu'à ce qu'elles complètent la zone frontale de l'épaulement du plateau en plaçant lesdits bords (5A) des parties latérales (5) en un arrangement extrémité contre extrémité dans la zone frontale du porte-empreinte, au-dessus de ladite poignée.

2. Procédé selon la revendication 1, **caractérisé par le fait que** l'on soude les parties latérales ensemble le long des bords respectifs (5A) arrangés extrémité contre extrémité et/ou à ladite partie centrale.

3. Porte-empreinte à usage dentaire adapté pour s'accommoder à l'ensemble d'une arcade, comprenant :
- un plateau (11) pour contenir le matériau d'empreinte, avec un fond (3) et un épaulement (5) ;
- et une poignée (9) pour manipuler le porte-empreinte,
dans lequel ladite poignée et ledit plateau sont fabriqués à partir d'une seule feuille de matériau laminaire (1) qui est coupée et pliée, et dans lequel ledit épaulement est formé de deux parties latérales (5) ayant deux bords (5A) arrangés extrémité contre extrémité dans la zone frontale du porte-empreinte, au-dessus de la poignée (9).

4. Porte-empreinte selon la revendication 3, **caractérisé en ce que** lesdites deux parties latérales (5) sont reliées à ladite partie de fond (11) le long de deux lignes de pliage incurvées (7) et **en ce que** lesdites parties latérales (5) sont incurvées le long d'une surface cylindrique pour former ladite zone frontale de l'épaulement du plateau.

5. Porte-empreinte selon la revendication 3 ou 4, **caractérisé en ce que** ladite feuille de matériau laminaire est une feuille métallique.

6. Porte-empreinte selon la revendication 3 ou 4 ou 5, **caractérisé en ce que** lesdites parties latérales (5) sont en parties séparées de la partie de fond (3) le long d'une fente (17) dans la zone frontale du plateau et sont en outre séparées l'une de l'autre le long des bords respectifs (5A) arrangés extrémité contre extrémité.

7. Porte-empreinte selon la revendication 3 ou 4 ou 5, **caractérisé en ce que** lesdites parties latérales (5) formant ledit épaulement sont soudées ensemble et/ou à la partie de fond (3) du plateau (11).
